# EUROPÄISCHE PATENTSCHRIFT

(11) **EP 4 519 583 B1**
(45) Veröffentlichungstag und Bekanntmachung des Hinweises auf die Patenterteilung: **25.02.2026**
(21) Anmeldenummer: 23730765.7
(22) Anmeldetag: 02.06.2023
(51) Int. Cl.: F16D 66/00, B23Q 16/06, F16D 71/00

(54) **VERFAHREN ZUM BETRIEB EINES SCHWENKANTRIEBS UND SCHWENKANTRIEB**
METHOD FOR OPERATING A SWIVEL ACTUATOR AND SWIVEL ACTUATOR
PROCÉDÉ DE FONCTIONNEMENT D'UN ACTIONNEUR PIVOTANT ET D'UN ACTIONNEUR PIVOTANT

(30) Priorität: 05.07.2022 DE 102022116653
(43) Veröffentlichungstag der Anmeldung: 12.03.2025
(73) Patentinhaber: Weiss GmbH, 74722 Buchen (Odw.) (DE)
(72) Erfinder: HORN, Arnold, 74736 Hardheim-Erfeld (DE)
(74) Vertreter: Manitz Finsterwald Patent- und Rechtsanwaltspartnerschaft mbB
(86) Internationale Anmeldenummer: PCT/EP2023/064780
(87) Internationale Veröffentlichungsnummer: WO 2024/008368

(56) Entgegenhaltungen:
- DE-A1- 102007 035 030
- DE-A1- 102014 000 196
- DE-U1- 20 115 843
- FR-A1- 2 252 165
- US-B1- 6 609 441

## Beschreibung

Die Erfindung betrifft ein Verfahren zum Betrieb eines Schwenkantriebs, insbesondere Rundschalttischs, mit einem zu einer Drehbewegung antreibbaren Abtriebselement, insbesondere Drehteller, und mit einer elektrisch aktuierbaren Bremseinrichtung zum Bremsen und/oder Fixieren des Abtriebselements.

Derartige Schwenkantriebe sind gerade in der industriellen Produktion weit verbreitet. Beispielsweise finden Rundschalttische eine breite Anwendung unter anderem in der Montage- und Automatisierungstechnik. Auf einem Drehteller solcher Rundschalttische werden beispielsweise Werkstücke angeordnet. Bei deren Bearbeitung und/ oder Montage wird der Drehteller in kontinuierliche oder getaktete Drehbewegungen versetzt, etwa um die Werkstücke von verschiedenen Richtungen aus bearbeiten zu können. Dabei ist die Präzision des Rundschalttischs von besonderer Bedeutung, damit das Werkstück stets wohl definierte Positionen / Orientierungen relativ zu den Montage- / Bearbeitungswerkzeugen einnimmt. Die Präzision der Vorrichtung ergibt sich aus der Genauigkeit, mit der der Teller die einzelnen Bearbeitungspositionen einnehmen kann, sowie der Präzision der Drehbewegung des Tellers zwischen den Bearbeitungspositionen.

In der Regel ist es erforderlich, den Drehteller während einer Montage- oder Bearbeitungsphase, d. h. in einer Phase, in der der Drehteller ruht, zu fixieren. Dies kann beispielsweise erforderlich sein, wenn besonders große Kräfte wirken und/oder die jeweilige Position besonders exakt gehalten werden muss. Zu diesem Zweck kann eine Bremseinrichtung vorgesehen sein, die direkt oder indirekt mit dem Abtriebselement zusammenwirkt. Mit anderen Worten ist es nicht unbedingt erforderlich, dass die Bremseinrichtung direkt an das Abtriebselement angreift. Es ist auch denkbar, dessen Fixierung über eine fest mit dem Abtriebselement verbundene Komponente zu erreichen.

Auch aus Sicherheitsgründen kann es wünschenswert sein, bedarfsgerecht für eine zuverlässige Fixierung des Abtriebselements sorgen zu können.

Der Begriff Bremseinrichtung soll im Kontext der vorliegenden Erfindung breit verstanden werden. Sie kann reibschlüssige und/oder formschlüssige Merkmale umfassen, mit denen eine zuverlässige Fixierung oder Verriegelung des Abtriebselements in der jeweils gewünschten Lage sichergestellt wird.

Bremseinrichtungen, die für Schwenkantriebe und insbesondere Rundschalttische geeignet sind, sind in der Regel elektrisch aktuierbare Einheiten, die einem nicht vermeidbaren Verschleiß unterworfen sind. Ein derartiger Verschleiß sorgt unter Umständen für eine ungenauere Fixierung und im schlimmsten Fall sogar für einen Ausfall des Schwenkantriebs, was zu Stillständen in der entsprechenden Produktionslinie führen kann.

Die US 6,609,441 B1 offenbart ein Verfahren zum Betrieb eines Rundschalttischs mit einem zu einer Drehbewegung antreibbaren Drehteller und mit einer elektrisch aktuierbaren Kupplungseinrichtung zum Fixieren des Drehtellers. Es ist ein Verfahren beschrieben, das dazu dient, die Drehung des Tellers bezüglich einer Basis zu verhindern, bis Kupplungselemente der Kupplungseinrichtung bei deren Betätigung vollständig ineinander greifen.

Es ist daher eine Aufgabe der vorliegenden Erfindung, verschleißbedingte Veränderungen der Bremseinrichtung frühzeitig erkennen und damit einhergehende Probleme im Vorfeld vermeiden zu können.

Diese Aufgabe wird durch ein Verfahren mit den Merkmalen des Anspruchs 1 gelöst.

Erfindungsgemäß wird während einer Aktuierung der Bremseinrichtung ein zeitlicher Verlauf zumindest eines charakteristischen Parameters der Bestromung der Bremseinrichtung bestimmt und auf Basis einer Analyse des zeitlichen Verlaufs des charakteristischen Parameters wird ein Zustand der Bremseinrichtung ermittelt. Wenn bei dieser Analyse Änderungen erkannt werden, kann darauf geschlossen werden, dass sich der Zustand der Bremseinrichtung verändert hat. Bevorzugt wird die Analyse kontinuierlich oder in regelmäßigen oder unregelmäßigen Abständen durchgeführt, beispielsweise bei jedem Lösevorgang der Bremseinrichtung. Eine hohe zeitliche Dichte der Analysen ermöglicht eine genauere Erfassung der Zustandsänderung der Bremseinrichtung.

Der Vollständigkeit halber wird darauf hingewiesen, dass eine Bestimmung eines zeitlichen Verlaufs des charakteristischen Parameters bedeuten kann, dass dieser kontinuierlich oder zu diskreten Zeitpunkten gemessen wird. Bevorzugt werden geeignete Abtastraten gewählt, um die Analyse mit der erforderlichen Genauigkeit durchführen zu können.

Das erfindungsgemäße Prinzip lässt sich auf die unterschiedlichsten Arten von Bremseinrichtungen anwenden, beispielsweise auf Sicherheitsbremsen, Haltebremsen und/oder Betriebsbremsen.

Ein Vorteil des erfindungsgemäßen Verfahrens ist, dass Parameter der Bestromung der Bremseinrichtung auf einfache Weise zu bestimmen sind. Ein hoher konstruktiver und/oder steuerungstechnische Aufwand ist zur Umsetzung des Verfahrens nicht erforderlich. In vielen Fällen kann sogar auf bereits vorhandene Komponenten zurückgegriffen werden, d.h. zusätzliche Sensorkomponenten sind in der Regel nicht erforderlich. Es ist auch durchaus denkbar, mehrere Parameter der Bestromung zu bestimmen und zu analysieren, um ein noch genaueres Bild des Zustands der Bremseinrichtung zu erhalten.

Gemäß einer Ausführungsform ist die Bremseinrichtung derart ausgestaltet, dass sie durch eine Bestromung geöffnet wird. Oder anders herum formuliert: Bei dieser Ausführungsform wird das Abtriebselement fixiert, wenn keine Bestromung der Bremseinrichtung erfolgt. Diese Bauform ist auch aus Sicherheitsaspekten in vielen Fällen vorteilhaft, da bei einem Stromausfall automatisch eine zuverlässige Fixierung des Abtriebselements erfolgt. Beispielsweise weist die Antriebseinrichtung ein durch Federkraft beaufschlagtes Bremselement auf, dass mittels eines Elektromagneten gegen die Federkraft in einen geöffneten Zustand gebracht werden kann ("Lüften der Bremseinrichtung"). Das erfindungsgemäße Prinzip ist jedoch auch auf eine Dauermagnetbremse anwendbar.

Der charakteristische Parameter, dessen zeitlicher Verlauf bestimmt wird, kann eine Stromstärke sein. Es ist jedoch auch möglich, den zeitlichen Verlauf der Spannung oder anderer Parameter zu beobachten.

Gemäß einer Ausführungsform des Verfahrens umfasst die Analyse ein Ermitteln eines lokalen Maximums oder eines lokalen Minimums und/oder einer charakteristischen Änderung des zeitlichen Verlaufs des charakteristischen Parameters, insbesondere wobei das lokale Maximum und/oder das lokale Minimum und/oder die charakteristische Änderung als Hinweis auf ein vollständiges Öffnen der Bremseinrichtung interpretiert werden.

Beispielsweise kann ein solcher Hinweis ein kurzzeitiger Abfall des beobachteten charakteristischen Parameters sein, beispielsweise der Stromstärke. Ein solcher Abfall in einem ansonsten stetigen Anstieg der Stromstärke während der Bestromung der Bremseinrichtung führt zur Ausbildung eines lokalen Maximums im Verlauf des bestimmten Parameters, auf das ein lokales Minimum folgt, da die Stromstärke im weiteren Verlauf der Aktivierung der Bremseinrichtung wieder ansteigt. Die Kurve der Stromstärke zeigt somit eine charakteristische Änderung, die Rückschlüsse auf den Zustand der Bremseinrichtung ziehen lassen.

Der physikalische Effekt, der zu dem kurzzeitigen Abfall der Stromstärke ("Stromeinbruch") führt, kann beispielsweise ein Anschlagen eines Ankers des elektromechanischen Teils der Bremseinrichtung an einem entsprechenden Magnetteil sein. Erst ab diesem Moment ist die Bremseinrichtung vollständig geöffnet. Letztlich handelt es sich hierbei also um einen Hub eines Bremselements von dem Abtriebselement bzw. von einer mit dieser verbunden Komponente weg. In einem Neuzustand der Bremseinrichtung ist dieser Hub, auch als Luftspalt bezeichnet, ein wohldefinierter Wert, nämlich die Nennluftspaltbreite. Mit zunehmendem Verschleiß ändert sich der zu überwindende Luftspalt; er wird breiter.

Gemäß einer Ausführungsform des Verfahrens wird daher eine charakteristische Dauer eines vordefinierten Teils der Aktuierung der Bremseinrichtung als Maß für den Zustand der Bremseinrichtung herangezogen, insbesondere wobei mittels der Analyse die Dauer des vordefinierten Teils der Aktuierung bestimmt wird. Die charakteristische Dauer ist in diesem Fall der Zeitraum, der zur Überwindung des Luftspalts erforderlich ist.

Insbesondere wird die charakteristische Dauer bestimmt, indem ein Zeitraum von einem Beginn der Bestromung der Bremseinrichtung bis zu einem lokalen Maximum oder lokalen Minimum und/oder bis zu einer charakteristischen Änderung des zeitlichen Verlaufs des charakteristischen Parameters ermittelt wird. Eine zeitliche Einordnung dieser Extremata bzw. des Eintritts der charakteristischen Änderung ermöglicht somit (zumindest qualitativ oder sogar quantitativ), zu erkennen, ob sich seine Breite verändert hat oder sogar wie breit der Luftspalt nun ist.

Gemäß einer weiteren Ausführungsform des Verfahrens wird die charakteristische Dauer mit einer Nenndauer verglichen und bei einem Unter- und/oder Überschreiten einer Nenndauer ein Korrektur- und/oder ein Warnsignal ausgegeben. Ein Korrektursignal kann beispielsweise dazu dienen, eine erhöhte Luftspaltbreite zu kompensieren, etwa durch Veränderungen des Bestromungsmusters. Ein Warnsignal kann akustischer und/oder optischer Art sein, um das Bedienungspersonal auf einen bestimmten Zustand der Bremseinrichtung aufmerksam zu machen. Ein entsprechendes Warnschema kann mehrstufig sein. Es ist auch möglich, ein entsprechendes Warnsignal automatisiert weiterzugeben (z.B. über ein drahtgebundenes oder drahtloses Datennetz), beispielsweise um bei Erkennen eines bestimmten Zustandes gleich eine Wartung anzufordern.

Eine Betriebssicherheit des Schwenkantriebs wird weiter verbessert, wenn ein Antrieb des Abtriebselements in Abhängigkeit des Zustands der Bremseinrichtung gesteuert wird. Insbesondere wird der Antrieb des Abtriebselements erst aktiviert, wenn erkannt wird, dass die Bremseinrichtung vollständig geöffnet ist. Um dies besonders zuverlässig sicherzustellen, kann ein vorbestimmtes oder in Abhängigkeit des Zustands der Bremseinrichtung bestimmtes Verzögerungsintervall vorgesehen ist, durch das eine Aktivierung des Antriebs des Abtriebselements nach einem Feststellen eines vollständigen Öffnens der Bremseinrichtung verzögert wird. Das Verzögerungsintervall kann ein fixer Wert sein. Es ist aber auch möglich, dass das Verzögerungsintervall an den Zustand der Bremseinrichtung angepasst wird. Beispielsweise kann ein längeres Verzögerungsintervall gewählt werden, wenn die Bremseinrichtung bereits einigen Verschleiß ausgesetzt ist, um eine größere Betriebssicherheit zu erreichen.

Das Verzögerungsintervall ist somit eine Art "Sicherheitspause" zwischen dem erkannten vollständigen Öffnen der Bremseinrichtung und dem Beginn der Bewegung des Abtriebselements. Dadurch kann der Verschleiß der Bremseinrichtung minimiert werden.

Grundsätzlich ist auch denkbar, dass die ermittelten Öffnungsdauern der Bremseinrichtung über einen gewissen Zeitraum gemittelt werden und dann das die Aktivierung des Antriebs entsprechend angepasst wird.

Die vorliegende Erfindung betrifft ferner einen Schwenkantrieb, insbesondere einen Rundschalttisch, mit einem zu einer Drehbewegung antreibbaren Abtriebselement, insbesondere Drehteller, mit einer elektrisch aktuierbaren Bremseinrichtung zum Bremsen und/oder Fixieren des Abtriebselements und mit einer Steuereinheit zur Steuerung eines Antriebs des Abtriebselements und/oder der Bremseinrichtung, die dazu eingerichtet und ausgebildet ist, ein Verfahren gemäß zumindest einer der vorstehend beschriebenen Ausführungsformen durchzuführen.

Weitere Ausführungsformen der Erfindung sind in den Ansprüchen, der Beschreibung und den beigefügten Zeichnungen angegeben. Nachfolgend wird die Erfindung rein beispielhaft unter Bezugnahme auf eine Ausführungsform der Erfindung erläutert. Es zeigen:
- Fig. 1: einen Ausführungsform eines Rundschalttischs,
- Fig. 2: einen Querschnitt durch eine weitere Ausführungsform eines Rundschalttischs,
- Fig. 3: einen schematischen Schaltplan eines Rundschalttischs und
- Fig. 4 bis 6: den zeitlichen Verlauf der Stromstärke bei der Bestromung der Bremseinrichtung in verschiedenen Zuständen.

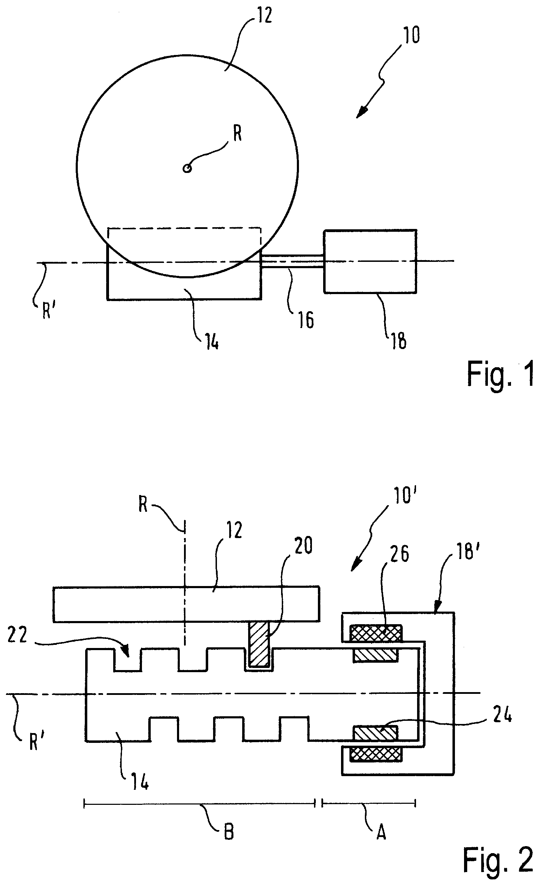

Fig. 1 zeigt in schematischer Weise rein beispielhaft einen Rundschalttisch 10, der einen Drehteller 12 aufweist, auf dem Werkstücke zur Bearbeitung und/oder Montage aufgespannt werden können. Der Drehteller 12 wird von einer Kurventrommel 14 zu einer Drehbewegung um eine Rotationsachse R angetrieben, die senkrecht zur Bildebene verläuft. Um eine Antriebsbewegung der Kurventrommel 14, die eine Rotation der Kurventrommel 14 um eine Rotationsachse R' senkrecht zu der Rotationsachse R ist, auf den Drehteller 12 zu übertragen, weist letzterer Mitnehmer (in Fig. 1 nicht gezeigt, siehe Mitnehmer 20 in Fig. 2) auf, die in an sich bekannter Form in eine die Kurventrommel 14 spiralförmig umlaufende Antriebsnut (in Fig. 1 nicht gezeigt, siehe Antriebsnut 22 in Fig. 2) mit konstanter oder variierender Steigung eingreifen. Die Antriebsnut kann einen oder mehrere Rastgänge aufweisen.

Die Kurventrommel 14 steht mit einer Antriebswelle 16 drehfest in Verbindung. Die Antriebswelle 16 ist gleichzeitig die Ausgangswelle eines Motors 18, der beispielsweise elektrisch angetrieben wird.

Bei dem Rundschalttisch 10 sind die Kurventrommel 14 und der Motor 18 koaxial angeordnet, d.h. sowohl der Motor 18 als auch die Antriebswelle 16 und die Kurventrommel 14 rotieren bei Betrieb um die gemeinsame Rotationsachse R.

Fig. 1 ist zu entnehmen, dass der Antrieb der Kurventrommel 14 auf direkte Weise erfolgt, d.h. ohne ein zwischen den Motor 18 und die Kurventrommel 14 geschaltetes Getriebe. Lediglich die Antriebswelle 16 ist vorgesehen, um ein Antriebsmoment zwischen den beiden genannten Komponenten zu übertragen. Bei Bedarf kann zwischen den Motor 18 und der Kurventrommel 14 aber auch ein Getriebe und/oder Antriebsriemen vorgesehen sein.

Als Motor 18 kann grundsätzlich jeder Motor zum Einsatz gelangen, wie beispielsweise ein Asynchron- oder Synchronmotor.

Fig. 2 zeigt einen Querschnitt durch eine weitere Ausführungsform 10' des Rundschalttischs. Im linken Teil der Zeichnung ist zu erkennen, wie ein Mitnehmer 20 des Drehtellers 12 in eine Antriebsnut 22 der Kurventrommel 14 eingreift. Die Darstellung dieses bekannten Antriebskonzept ist lediglich stark vereinfacht dargestellt.

Der rechte Teil der Fig. 2 umfasst die Antriebskomponenten der Kurventrommel 14. Im Gegensatz zu der in Fig. 1 gezeigten Ausführungsform weist der Antrieb des Rundschalttischs 10' keine Antriebswelle 16 auf. Vielmehr bildet die Kurventrommel 14 selbst ein Teil des Motors 18', der als Torque-Motor ausgebildet ist. Die Kurventrommel 14 weist an einem Verlängerungsabschnitt A (Elektro-) Magnete 24 auf, die mit Spulen 26 des Torque-Motors 18' zusammenwirken. Mit anderen Worten ist der Verlängerungsabschnitt A der Rotor des Torque-Motors 18', der mit einem die Antriebsnut 22 aufweisenden Abschnitt B der Kurventrommel 14 in direkter Verbindung steht. Die Abschnitte A, B sind folglich integrale Bestandteile der Kurventrommel 14. Der Abschnitt B der Kurventrommel 14 kann - bezogen auf den Verlängerungsabschnitt A - auch als Verlängerung des Rotors des Torque-Motors 18' bezeichnet werden. Der Verlängerungsabschnitt A weist im Wesentlichen den gleichen Durchmesser auf, wie der mit der Antriebsnut 22 versehene Abschnitt B der Kurventrommel 14.

Die in Fig. 2 skizzenhaft dargestellte Ausführungsform des Antriebs des Rundschalttischs 10' zeichnet sich durch eine kompakte Bauform und einem präzisen Antrieb der Kurventrommel 14 aus. Teure und reibungs-/spielbehaftete Getriebeelemente gelangen nicht zum Einsatz.

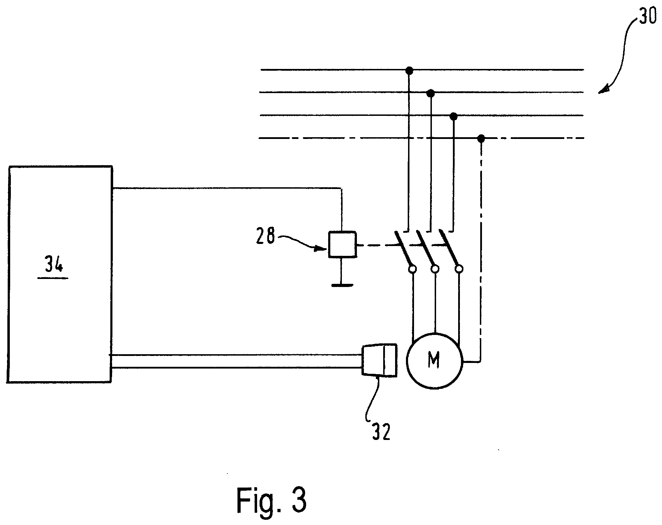

Fig. 3 zeigt einen vereinfachten Schaltplan zur Ansteuerung eines Rundschalttischs, der zur Vereinfachung in dieser Fig. nicht gezeigt ist. Dessen Motor M (siehe beispielsweise Motoren 18, 18' in den Fig. 1 und 2) steht über einen Motorschütz 28 mit einem Dreiphasenwechselstromnetz 30 in Verbindung. Der Schütz 28 stellt sicher, dass eine Bestromung des Motors M erst erfolgt, wenn eine Bremse 32 vollständig geöffnet oder gelüftet ist.

Die Bremse 32 ist elektromechanischer Bauart und dient dazu, den Drehteller 12 bei Bedarf zu fixieren. Sie wirkt dabei - wie eingangs beschrieben - direkt oder indirekt mit dem Drehteller 12 zusammen. Im vorliegenden Ausführungsbeispiel muss die Bremse 32 bestromt werden, um sie gegen eine einen geschlossenen Zustand der Bremse 32 sichernde Vorspannkraft zu öffnen. Die Öffnungsbewegung wird beispielsweise durch die Kraft eines Elektromagneten bewirkt.

Die Bremse 32 ist einem Verschleiß unterworfen, sodass ihr vollständiges Öffnen oder Lüften mit zunehmender Betriebsdauer einen größeren Hub erforderlich macht. Erfindungsgemäß wird daher vorgeschlagen, den Verschleiß der Bremse 32 mittels Analyse eines zeitlichen Verlaufs eines charakteristischen Parameters der Bestromung während des Öffnens der Bremse 32 zu bestimmen. Zu diesem Zweck ist die Bremse 32 mit einer Steuereinheit 34 verbunden, die die Analyse des zeitlichen Verlaufs des Parameters vornimmt. Es hat sich als zweckmäßig erwiesen, die Stromaufnahme der Bremse 32 während des Öffnens zu betrachten. Wenn die Analyse der sprechenden Daten ergibt, dass die Bremse 32 vollständig geöffnet ist, so gibt die Steuereinheit 34 ein entsprechendes Signal an den Motorschütz 28 aus, der dann für eine Bestromung des Motors M sorgt. Dadurch wird sichergestellt, dass der Drehteller 12 nicht angetrieben wird, bevor die Bremse nicht zuverlässig gelöst wurde. Zur Erhöhung der Betriebssicherheit kann vorgesehen sein, dass nach einem Feststellen eines vollständigen Öffnens der Bremse 32 eine gewisse Zeit gewartet wird, bevor der Motor M bestromt wird. Diese Verzögerung kann ein fixer Wert sein. Es ist aber durchaus denkbar, diese Verzögerung in Abhängigkeit des Verschleißes der Bremse 32 zu wählen.

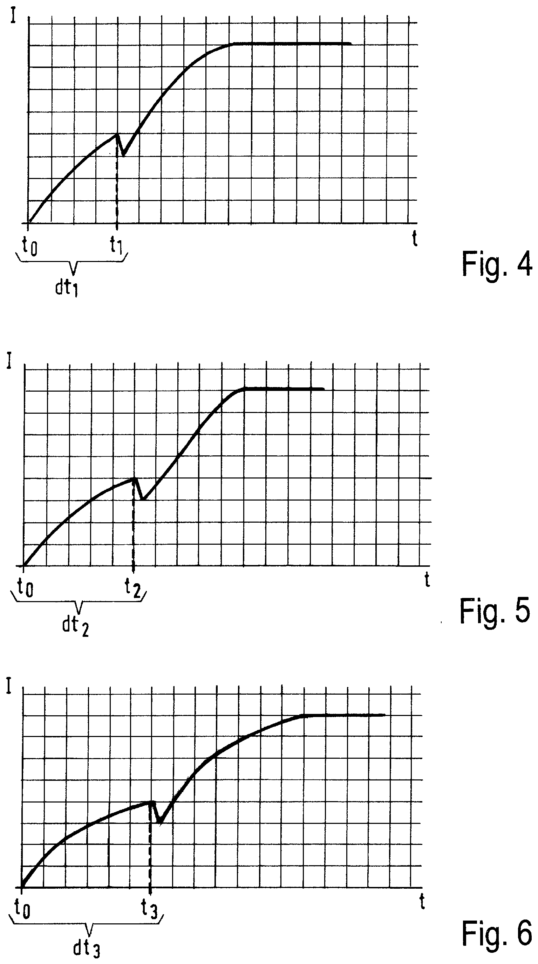

Anhand der in den Fig. 4 bis 6 gezeigten Kurven wird im Folgenden erläutert, wie das vollständige Öffnen der Bremse 32 bestimmt wird. Die Kurven zeigen jeweils den Verlauf der Stromstärke I gegen die Zeit t.

Fig. 4 zeigt einen typischen Verlauf, der zu erwarten ist, wenn die Bremse 32 noch keinem (wesentlichen) Verschleiß ausgesetzt war. Zum Zeitpunkt t₀ beginnt die Bestromung der Bremse 32, um diese zu öffnen. Die Stromstärke I steigt im Folgenden an, bis sie zu einem Zeitpunkt t₁ kurzzeitig abfällt (lokales Maximum im Kurvenverlauf), um danach wieder anzusteigen (lokales Minimum im Kurvenverlauf) und schließlich ein Plateau zu erreichen. Der vorstehend beschrieben charakteristische Abfall markiert den Zeitpunkt, an dem ein Anker eines Elektromagneten der Bremse 32 an einem räumlich statisch angeordneten Teil der Bremse 32 anschlägt. Sie ist nun vollständig geöffnet. Eine Dauer dt₁ zur Öffnung der Bremse 32 wird also durch den Zeitpunkt t₁ definiert.

Die Dauer dt₁ bildet somit einen Referenzwert. Mit zunehmendem Verschleiß nimmt die Öffnungsdauer zu, wie in den Fig. 5 und 6 gezeigt ist (siehe Zeitpunkte t₂ und ts bzw. Öffnungsdauern dt₂ und dt₃). Es kann vorgesehen sein, dass bei einem Überschreiten eines Schwellwerts der Öffnungsdauer dt ein Korrektur- und/oder Warnsignal ausgegeben wird, um - wie eingangs bereits beschrieben wurde - z.B. eine Anpassung der Bestromung des Motors M vorzunehmen oder eine Wartung anzumahnen.

Vorstehend wurde das erfindungsgemäße Verfahren in Zusammenhang mit der Analyse eines zeitlichen Verlaufs der Stromstärke und insbesondere anhand eines charakteristischen kurzzeitigen Stromabfalls beim Öffnen einer Bremseinrichtung beschrieben. Es versteht sich, dass das der Erfindung zugrunde liegende Konzept auch die Analyse von Kurven anderer Parameter und/oder die Betrachtung anderer charakteristischer Eigenschaften oder Muster der entsprechenden Kurven einschließt. Ferner sei darauf hingewiesen, dass übliche Methoden zur Datenanalyse, wie etwa Filterung und/oder Glättung, zum Einsatz gelangen können, um das erfindungsgemäße Verfahren effizienter zu gestalten.

### Bezugszeichenliste

- 10, 10': Rundschalttisch
- 12: Drehteller
- 14: Kurventrommel
- 16: Antriebswelle
- M, 18, 18': Motor bzw. Torque-Motor
- 20: Mitnehmer
- 22: Antriebsnut
- 24: Magnet
- 26: Spule
- 28: Motorschütz
- 30: Dreiphasenwechselstromnetz
- 32: Bremse
- 34: Steuereinheit

- R, R': Rotationsachse
- A: Verlängerungsabschnitt
- B: Nutabschnitt
- I: Stromstärke
- t: Zeit
- t₁, t₂, t₃: Zeitpunkt
- dt₁, dt₂, dt₃: Öffnungsdauer
- Max: lokales Maximum
- Min: lokales Minimum

## Patentansprüche

1. Verfahren zum Betrieb eines Schwenkantriebs, insbesondere Rundschalttischs (10, 10'), mit einem zu einer Drehbewegung antreibbaren Abtriebselement, insbesondere Drehteller (12), und mit einer elektrisch aktuierbaren Bremseinrichtung (32) zum Bremsen und/oder Fixieren des Abtriebselements,
wobei während einer Aktuierung der Bremseinrichtung ein zeitlicher Verlauf (I-t) zumindest eines charakteristischen Parameters (I) der Bestromung der Bremseinrichtung bestimmt wird und auf Basis einer Analyse des zeitlichen Verlaufs des charakteristischen Parameters ein Zustand der Bremseinrichtung ermittelt wird.

2. Verfahren nach Anspruch 1,
wobei die Bremseinrichtung (32) derart ausgestaltet ist, dass sie durch eine Bestromung geöffnet wird.

3. Vorrichtung nach Anspruch 1 oder 2,
wobei der charakteristische Parameter eine Stromstärke (I) ist.

4. Verfahren nach zumindest einem der vorstehenden Ansprüche,
wobei die Analyse ein Ermitteln eines lokalen Maximums (Max) oder eines lokalen Minimums (Min) und/oder einer charakteristischen Änderung des zeitlichen Verlaufs des charakteristischen Parameters (I) umfasst, insbesondere wobei das lokale Maximum und/oder das lokale Minimum und/oder die charakteristische Änderung als Hinweis auf ein vollständiges Öffnen der Bremseinrichtung (32) interpretiert werden.

5. Verfahren nach zumindest einem der vorstehenden Ansprüche,
wobei eine charakteristische Dauer (dt₁, dt₂, dt₃) eines vordefinierten Teils der Aktuierung der Bremseinrichtung als Maß für deren Zustand herangezogen wird, insbesondere wobei mittels der Analyse die Dauer des vordefinierten Teils der Aktuierung bestimmt wird.

6. Verfahren nach Anspruch 5,
wobei die charakteristische Dauer (dt₁, dt₂, dt₃) bestimmt wird, indem ein Zeitraum von Beginn der Bestromung (t₀) bis zu einem lokalen Maximum (Max) oder lokalen Minimum (Min) und/oder bis zu einer charakteristischen Änderung des zeitlichen Verlaufs des charakteristischen Parameters ermittelt wird.

7. Verfahren nach Anspruch 5 oder 6,
wobei die charakteristische Dauer (dt₁, dt₂, dt₃) mit einer Nenndauer verglichen wird und bei einem Unter- und/oder Überschreiten einer Nenndauer ein Korrektur- und/oder ein Warnsignal ausgegeben wird.

8. Verfahren nach zumindest einem der vorstehenden Ansprüche,
wobei ein Antrieb (M) des Abtriebselements (12) in Abhängigkeit des Zustands der Bremseinrichtung (32) gesteuert wird.

9. Verfahren nach zumindest einem der vorstehenden Ansprüche,
wobei ein Antrieb (M) des Abtriebselements (12) erst aktiviert wird, wenn erkannt wird, dass die Bremseinrichtung (32) vollständig geöffnet ist.

10. Verfahren nach Anspruch 8 oder 9,
wobei ein vorbestimmtes oder in Abhängigkeit des Zustands der Bremseinrichtung (32) bestimmtes Verzögerungsintervall vorgesehen ist, durch das eine Aktivierung des Antriebs (M) des Abtriebselements (12) nach einem Feststellen eines vollständigen Öffnens der Bremseinrichtung verzögert wird.

11. Schwenkantrieb, insbesondere Rundschalttisch (10, 10'), mit einem zu einer Drehbewegung antreibbaren Abtriebselement, insbesondere Drehteller (12), mit einer elektrisch aktuierbaren Bremseinrichtung (32) zum Bremsen und/oder Fixieren des Abtriebselements und mit einer Steuereinheit (34) zur Steuerung eines Antriebs (M) des Abtriebselements und/oder der Bremseinrichtung, die dazu eingerichtet und ausgebildet ist, ein Verfahren gemäß zumindest einem der vorstehenden Ansprüche durchzuführen.

## Claims

1. A method for operating a pivot drive, in particular a rotary indexing table (10, 10'), comprising an output element which can be driven to make a rotational movement, in particular a turntable (12), and an electrically actuatable braking device (32) for braking and/or fixing the output element,
wherein a time development (I-t) of at least one characteristic parameter (I) of the energization of the braking device is determined during an actuation of the braking device and a state of the braking device is determined on the basis of an analysis of the time development of the characteristic parameter.

2. A method according to claim 1,
wherein the braking device (32) is designed such that it is opened by an energization.

3. An apparatus according to claim 1 or 2,
wherein the characteristic parameter is a current intensity (I).

4. A method according to at least one of the preceding claims,
wherein the analysis comprises a determination of a local maximum (Max) or a local minimum (Min) and/or of a characteristic change in the time development of the characteristic parameter (I), in particular wherein the local maximum and/or the local minimum and/or the characteristic change are interpreted as an indication of a complete opening of the braking device (32).

5. A method according to at least one of the preceding claims,
wherein a characteristic duration (dt₁, dt₂, dt₃) of a predefined part of the actuation of the braking device is used as a measure for the state of the braking device, in particular wherein the duration of the predefined part of the actuation is determined by means of the analysis.

6. A method according to claim 5,
wherein the characteristic duration (dt₁, dt₂, dt₃) is determined by determining a time period from the start of the energization (t₀) up to a local maximum (Max) or local minimum (Min) and/or up to a characteristic change in the time development of the characteristic parameter.

7. A method according to claim 5 or 6,
wherein the characteristic duration (dt₁, dt₂, dt₃) is compared with a nominal duration and a correction signal and/or a warning signal is/are output if a nominal duration is fallen below and/or exceeded.

8. A method according to at least one of the preceding claims,
wherein a drive (M) of the output element (12) is controlled in dependence on the state of the braking device (32).

9. A method according to at least one of the preceding claims,
wherein a drive (M) of the output element (12) is only activated if it is recognized that the braking device (32) is completely open.

10. A method according to claim 8 or 9,
wherein a predetermined delay interval or a delay interval determined in dependence on the state of the braking device (32) is provided, by which delay interval an activation of the drive (M) of the output element (12) is delayed after a complete opening of the braking device has been detected.

11. A pivot drive, in particular a rotary indexing table (10, 10'), comprising an output element which can be driven to make a rotational movement, in particular a turntable (12), an electrically actuatable braking device (32) for braking and/or fixing the output element, and a control unit (34) for controlling a drive (M) of the output element and/or the braking device, said control unit being configured and adapted to perform a method according to at least one of the preceding claims.

## Revendications

1. Procédé pour faire fonctionner un entraînement pivotant, en particulier une table de transfert circulaire (10, 10'), comprenant un élément de sortie susceptible d'être entraîné en rotation, en particulier un plateau tournant (12), et un dispositif de freinage (32) à actionner par voie électrique pour freiner et/ou immobiliser l'élément de sortie,
dans lequel, lors de l'actionnement du dispositif de freinage, l'évolution temporelle (I-t) d'au moins un paramètre caractéristique (I) de l'alimentation électrique du dispositif de freinage est définie, et l'état du dispositif de freinage est déterminé à partir de l'analyse de l'évolution temporelle du paramètre caractéristique.

2. Procédé selon la revendication 1,
dans lequel le dispositif de freinage (32) est conçu de manière à s'ouvrir lors d'une alimentation électrique.

3. Dispositif selon la revendication 1 ou 2,
dans lequel le paramètre caractéristique est l'intensité du courant (I).

4. Procédé selon l'une au moins des revendications précédentes,
dans lequel l'analyse consiste à déterminer un maximum local (Max) ou un minimum local (Min) et/ou une variation caractéristique dans l'évolution temporelle du paramètre caractéristique (I),
en particulier, le maximum local et/ou le minimum local et/ou la variation caractéristique sont interprétés comme une indication sur l'ouverture complète du dispositif de freinage (32).

5. Procédé selon l'une au moins des revendications précédentes,
dans lequel une durée caractéristique (dt₁, dt₂, dt₃) d'une partie prédéfinie de l'actionnement du dispositif de freinage est utilisée comme mesure de son état,
en particulier, la durée de la partie prédéfinie de l'actionnement est définie par l'analyse.

6. Procédé selon la revendication 5,
dans lequel la durée caractéristique (dt₁, dt₂, dt₃) est définie en déterminant la période écoulée entre le début de l'alimentation électrique (t0) et l'obtention d'un maximum local (Max) ou d'un minimum local (Min) et/ou l'obtention d'une variation caractéristique dans l'évolution temporelle du paramètre caractéristique.

7. Procédé selon la revendication 5 ou 6,
dans lequel la durée caractéristique (dt₁, dt₂, dt₃) est comparée à une durée nominale, et un signal de correction et/ou d'avertissement est émis si la durée nominale est supérieure et/ou inférieure à la durée nominale.

8. Procédé selon l'une au moins des revendications précédentes,
dans lequel l'entraînement (M) de l'élément de sortie (12) est commandé en fonction de l'état du dispositif de freinage (32).

9. Procédé selon l'une au moins des revendications précédentes,
dans lequel l'entraînement (M) de l'élément de sortie (12) n'est activé que lorsqu'il est détecté que le dispositif de freinage (32) est complètement ouvert.

10. Procédé selon la revendication 8 ou 9,
dans lequel est prévu un intervalle de retard prédéfini ou défini en fonction de l'état du dispositif de freinage (32), par lequel l'activation de l'entraînement (M) de l'élément de sortie (12) est retardée lorsqu'il a été détecté que le dispositif de freinage est complètement ouvert.

11. Entraînement pivotant, en particulier table de transfert circulaire (10, 10'), comprenant un élément de sortie susceptible d'être entraîné en rotation, en particulier un plateau tournant (12), et comprenant un dispositif de freinage (32) à actionner par voie électrique pour freiner et/ou immobiliser l'élément de sortie, et une unité de commande (34) pour commander un entraînement (M) de l'élément de sortie et/ou le dispositif de freinage, qui est conçue et agencée pour mettre en œuvre un procédé selon l'une au moins des revendications précédentes.
